# EUROPÄISCHE PATENTANMELDUNG

(11) **EP 3 528 473 A1**
(43) Veröffentlichungstag der Anmeldung: **21.08.2019**
(21) Anmeldenummer: 18211893.5
(22) Anmeldetag: 12.12.2018
(51) Int. Cl.: H04L 29/08, G06F 9/455, G06F 17/22

(54) **VERFAHREN, CLIENT-COMPUTER UND COMPUTERPROGRAMM ZUR AUSFÜHRUNG VON QUELLCODE AN EINEM CLIENT-COMPUTER**

(30) Priorität: 16.02.2018 DE 102018103529
(71) Anmelder: schnee von morgen webTV GmbH, 12435 Berlin (DE)
(72) Erfinder: LONGOLIUS, Nikolai, 10999 Berlin (DE); TOPFSTEDT, Hannes Fabian, 1220 Wien (AT); SCHREITER, Vincent, 22529 Hamburg (DE); HOFMANN, Johannes, 10783 Berlin (DE)
(74) Vertreter: Müller, Wolfram Hubertus

(57) **Zusammenfassung**

Die Erfindung betrifft ein Verfahren zur Ausführung von Quellcode an einem Client-Computer (1), wobei der Quellcode von einer externen Quelle geladen und im Client-Computer (1) ausgeführt wird und der Quellcode dabei im Client-Computer (1) eine eigene Netzwerkkommunikation initiiert. Es ist vorgesehen, dass der Quellcode in einer in den Client-Computer (1) integrierten Sandbox (4) ausgeführt wird, in der zum einen der Quellcode gegenüber der Standard-Ausführungsumgebung (6) des Client-Computers (1) abgeschirmt ist und in der zum anderen die durch den Quellcode ausgelösten Ausführungsanweisungen in Ausführungsanweisungen umgewandelt werden, die von der Standard-Ausführungsumgebung (6) zur Realisierung der Netzwerkkommunikation ausgeführt werden können. Die Erfindung betrifft des Weiteren einen Client-Computer (1).

## Beschreibung

Die Erfindung betrifft ein Verfahren zur Ausführung von Quellcode an einem Client-Computer sowie einen entsprechend eingerichteten Client-Computer.

Es ist bekannt, dass Browser und ähnliche Interpreter zur Laufzeit Quellcode von externen Ressourcen laden und ausführen, wobei der Quellcode beispielsweise für eine korrekte Darstellung und Funktion einer Website benötigt wird. Der geladene Quellcode von externen Quellen unterliegt dabei typischerweise einer externen technischen Kontrolle und kann sich jederzeit ändern, etwa Funktionalitäten verlieren oder neue Funktionalitäten dazugewinnen.

Es ist möglich, dass der geladene Quellcode eigenen Lizenzvereinbarungen unterliegt, welche z.B. eine Veränderung des Quellcodes ausschließen. Der geladene Quellcode darf daher nur in der vorliegenden Form ausgeführt und nicht verändert werden.

Wird ein solcher Quellcode in einem Webbrowser ausgeführt, ist der Quellcode grundsätzlich in der Lage und ggf. sogar darauf angewiesen, eine eigene Netzwerkkommunikation zu initialisieren und durchzuführen. Eine "eigene" Netzwerkkommunikation bedeutet dabei, dass die Netzwerkkommunikation unabhängig von einer evtl. schon bestehenden Netzwerkkommunikation des Webbrowsers durch den Quellcode initiiert wird.

Hier kann allerdings das Problem auftauchen, dass die gewünschte eigene Netzwerkkommunikation nicht möglich ist, z.B. weil der Webbrowser, eine Firewall, eine defekte Netzwerkkomponente oder eine Webbrowsererweiterung, wie z.B. ein Adblocker diese Kommunikation verhindert oder Teile der Kommunikation verändert. Solche Komponenten werden im Folgenden allgemein als Standard-Ausführungsumgebung des Client-Computers bezeichnet. Es besteht somit ein Bedarf, eine durch einen geladenen externen Quellcode verursachte Netzwerkkommunikation zu ermöglichen, ohne dass der Quellcode verändert wird und obwohl die Standard-Ausführungsumgebung des Client-Computers eine solche Netzwerkkommunikation nicht unterstützt bzw. blockiert.

Aus der DE 10 2012 102 399 A1 sind ein Verfahren und eine Telekommunikationseinrichtung zur Bereitstellung von Daten an einem Client-Computer bekannt. Dabei wird in die Kommunikation zwischen einem Client-Computer und einem Server, der die zu übertragenden Daten enthält, ein Proxy-Server gesetzt, wobei alle Datenpakete zwischen dem Client-Computer und dem Server über den Proxy-Server geleitet werden. Die gewünschten Daten werden vom Server zunächst zum Proxy-Server übertragen. Im Proxy-Server erfolgt eine Manipulation der Absenderinformation der Datenpakete und/oder der Absenderinformation einer in den Datenpaketen enthaltenen, für den Client-Computer bestimmten Cookie-Datei. Durch dieses Verfahren können defekte Netzwerkrouten umgangen und ggf. defekte Datenpakete repariert werden. Zusätzlich dient diese Manipulation dazu zu vermeiden, dass das Ausführen der Daten im Client-Computer durch Erkennen bestimmter Absenderinformationen blockiert werden kann. Die so manipulierten Daten werden vom Proxy-Server zum Client-Computer übertragen und dort angezeigt.

Der vorliegenden Erfindung liegt die Aufgabe zugrunde, eine durch einen geladenen externen Quellcode verursachte Netzwerkkommunikation in einem Client-Computer mit einer Standard-Ausführungsumgebung zur Laufzeit zu ermöglichen, ohne dabei den nachgeladenen Quellcode verändern zu müssen. Mit anderen Worten soll die Integrität und Funktionalität von Netzwerkkommunikation, welche aus unverändertem externen Quellcode zur Laufzeit initiiert wird, sichergestellt werden.

Diese Aufgabe wird erfindungsgemäß durch ein Verfahren mit den Merkmalen des Anspruchs 1, einen Client-Computer mit den Merkmalen des Anspruchs 9 und ein Computerprogramm mit den Merkmalen des Patentanspruchs 15 gelöst. Ausgestaltungen der Erfindung sind in den Unteransprüchen angegeben.

Danach sieht die Erfindung ein Verfahren vor, bei dem Daten in Form von Quellcode von einer externen Quelle geladen werden, der Quellcode im Client-Computer ausgeführt wird und der Quellcode dabei im Client-Computer eine eigene Netzwerkkommunikation initiiert und durchführt. Erfindungsgemäß ist vorgesehen, dass der Quellcode in einer in den Client-Computer integrierten Sandbox ausgeführt wird, in der zum einen der Quellcode gegenüber der Standard-Ausführungsumgebung des Client-Computers abgeschirmt ist und in der zum anderen die durch den Quellcode ausgelösten Ausführungsanweisungen in Ausführungsanweisungen umgewandelt werden, die von der Standard-Ausführungsumgebung zur Realisierung der Netzwerkkommunikation ausgeführt werden.

Das Merkmal, dass die durch den Quellcode ausgelösten Ausführungsanweisungen in Ausführungsanweisungen umgewandelt werden, die von der Standard-Ausführungsumgebung zur Realisierung der Netzwerkkommunikation ausgeführt werden, bedeutet nicht, dass eine eindeutige Abbildung zwischen den jeweiligen Ausführungsanweisungen erfolgen muss. Die "Umwandlung" kann auch durch eine Folge von Anweisungen in der Sandbox erfolgen, die beispielsweise ein Kapseln, Erweitern und/oder Manipulieren der ursprünglichen Ausführungsanweisungen des Quellcodes umfassen, wobei nur einige Ausführungsanweisungen oder erst die letzte Ausführungsanweisung einer solchen Umwandlung an die Standard-Ausführungsumgebung gegeben wird, die dann anhand dieser Ausführungsanweisungen die Netzwerkkommunikation ermöglicht, die der Quellcode in direktem Austausch mit der Standard-Ausführungsumgebung nicht bereitstellen könnte.

Die Erfindung beruht somit auf dem Gedanken, es zu ermöglichen, in die Netzwerkkommunikation von externem Quellcode einzugreifen, ohne diesen zu verändern, indem eine Ausführungsumgebung in Form einer Sandbox geschaffen wird, in welcher die Funktionsweise bestimmter Ausführungsanweisungen bzw. Befehle des Quellcodes manipuliert und erweitert werden. Als Metapher: Es werden nicht die Wörter eines Buches, sondern die Bedeutung der Wörter im Lexikon verändert. Dabei wird jeder geladene oder nachgeladene Quellcode, beispielsweise Programmbestandteile einer Webseite, innerhalb der Sandbox ausgeführt. Die Sandbox ist so gestaltet, dass Quellcode bzw. Programmbestandteile, welche von dem externen Quellcode nachgeladen werden, selbst auch wieder in der Sandbox laufen.

Als Sandbox wird eine isolierte Ausführungsumgebung bezeichnet, in dem die Ausführung von Quellcode bzw. Programmcode keine Auswirkung auf die äußere Umgebung hat. Die erfindungsgemäße Sandbox ist zudem in der Lage, die Bedeutung und Auswirkung definierter Programmbefehle zu verändern. Dadurch kann die Netzwerkkommunikation so manipuliert oder repariert werden, dass der Quellcode unverändert bleibt.

Beispielhafte Anwendungsfälle für die Erfindung sind: Werbeauslieferungen im Webbrowser, die Reparatur defekter Netzwerkrouten, Probleme bei der Netzwerkkommunikation, die durch Firewalls erzeugt werden, oder jeglicher mittels Interpreter ausgeführter Quellcode, bei dem die Ausführung einzelner Befehle Probleme verursacht.

Die Standard-Ausführungsumgebung des Client-Computers umfasst beispielsweise einen Webbrowser und Komponenten, auf die der Webbrowser zugreift, wie z.B. einen Videoplayer.

Eine Ausgestaltung der Erfindung sieht vor, dass alle Ausführungsanweisungen zum Aufbau, zur Durchführung und zum Abbau der Netzwerkkommunikation an die Sandbox übergeben werden, die diese Ausführungsanweisungen in entsprechende, durch die Standard-Ausführungsumgebung des Client-Computers durchgeführte Maßnahmen umwandelt. Dabei ist bevorzugt vorgesehen, dass der gesamte Befehlsablauf des externen Quellcodes innerhalb der Sandbox ausgeführt wird. Jedoch werden nur die für die Netzwerkkommunikation notwendigen Ausführungsanweisungen manipuliert.

Eine weitere Ausgestaltung der Erfindung sieht vor, dass alle Zugriffe des ausführenden Quellcodes auf die Standard-Ausführungsumgebung durch die Sandbox geleitet werden. Dabei ist vorgesehen, dass mindestens einer der folgenden Typen, und bevorzugt alle der folgenden Typen von Funktionen der Standard-Ausführungsumgebung (insbesondere dem Webbrowser) von der Sandbox übernommen wird:
- Funktionen zum Erzeugen oder Zurückliefern von Elementen des Typs "Document Object Model" ("DOM-Elemente");
- Funktionen zum Manipulieren von DOM-Elementen;
- Funktionen zum Ausführen des Quellcodes,
- Funktionen zum Ausführen eines Netzwerkrequests (Prototypobjekte).

Das "Document Object Model" (DOM, engl. für Dokumenten-Objekt-Modell) ist eine Spezifikation einer Programmierschnittstelle, welche HTML- oder XML-Dokumente als eine Baumstruktur darstellt, in der jeder Knoten ein Objekt ist, welches einen Teil des Dokumentes repräsentiert, z.B. einen Absatz, eine Überschrift, ein Video oder etwa eine Tabellenzelle, vgl. https://de.wikipedia.org/wiki/Document_Object_Model.

Eine weitere Ausgestaltung der Erfindung sieht vor, dass Funktionen, die DOM-Elemente erzeugen oder zurückliefern, dahingehend geändert werden, dass diese ein Proxy-Objekt zurückgeben, welches das ursprüngliche DOM-Element enthält, wobei alle Zugriffe auf das DOM-Element durch einen ProxyHandler des Proxy-Objekts laufen und diesen vor einem direkten Zugriff kapseln. Hierdurch wird gewährleistet, dass alle oben genannten Funktionen und Objekte die Netzwerkkommunikation durch die Sandbox laufen lassen.

Eine weitere Ausgestaltung der Erfindung sieht vor, dass der Quellcode innerhalb der Sandbox ausgeführt wird und dabei Programmcode, der im Rahmen der durch den Quellcode initiierten Netzwerkkommunikation geladen wird, ebenfalls in der Sandbox ausgeführt wird. Dadurch wird eine fortlaufende Kommunikation im Rahmen der durch den Quellcode initiierten Netzwerkkommunikation gewährleistet.

Eine weitere Ausgestaltung der Erfindung sieht vor, dass die durch den Quellcode initiierte Netzwerkkommunikation über einen Proxy-Server geleitet wird, wobei die Daten im Proxy-Server derart manipuliert werden, dass an den Proxy-Server geleiteten Daten nach der Manipulation an den Client-Computer übertragen und dort interpretiert und ggf. dargestellt werden können. Die Netzwerkzugriffe des nachgeladenen Quellcodes werden somit über einen Proxy-Server geleitet. Ziel dieser Vorgehensweise ist, Ausführungsanweisungen des externen Quellcode in der Sandbox dahingehend zu erweitern, dass die Netzwerkkommunikation korrekt stattfinden kann.

Insofern greift die Erfindung auf das in der DE 10 2012 102 399 A1 beschriebene Verfahren zurück. Auf die DE 10 2012 102 399 A1 wird insofern explizit Bezug genommen. Dabei sieht die DE 10 2012 102 399 A1 vor, dass gewünschte, am Client-Computer darzustellende Daten von einem Werbung-Server an den Proxy-Server übertragen werden. Im Proxy-Server erfolgt eine Manipulation der Absenderinformation der Datenpakete und/oder der Absenderinformation einer in den Datenpaketen enthaltenen, für den Client-Computer bestimmten Cookie-Datei. Diese Manipulation dient dazu zu vermeiden, dass das Abspielen der Daten im Client-Computer durch Erkennen bestimmter Absenderinformationen blockiert werden kann. Die so manipulierten Daten werden vom Proxy-Server zum Client-Computer übertragen und dort abgespielt. Durch den Einsatz eines Proxy-Servers wird die gesamte Kommunikation zwischen dem Client-Computer und dem Werbungs-Server in einer Art und Weise manipuliert, dass Netzwerkprobleme behoben und die Absenderinformation für den Client-Computer nicht mehr erkennbar ist und daher Filterlisten und das Blockieren von Cookies eines Drittservers nicht mehr greifen. Vielmehr wird mit allen modernen Web-Browsern die Werbung sowohl angezeigt als auch deren Auslieferung gezählt.

Eine weitere Ausgestaltung der Erfindung sieht vor, dass der Quellcode eine Netzwerkkommunikation initiiert, die dazu dient, Video- Grafik-, Banner- oder Textdaten von einem Werbungs-Server von einem Werbungs-Server an den Client-Computer zu übertragen und diese auf dem Client-Computer darzustellen. Weiter kann vorgesehen sein, dass das erfindungsgemäße Verfahren im Rahmen der Ausführung eines Webbrowers durchgeführt wird, wobei die Standard-Ausführungsumgebung durch den Webbrowser bereitgestellt wird. Der Quellcode kann z.B. Bestandteil eines Werbeformats gemäß dem Industriestandard VPAID sein, wobei der Quellcode zur Laufzeit der anzeigenden Webseite ausgeführt wird.

VPAID (Video Player-Ad Interface Definition) ist die Erweiterung des VAST Standards. Es bezeichnet eine standardisierte Schnittstellenbeschreibung für die Kommunikation zwischen Werbemittel und Videoplayer und ermöglicht interaktive Video Ads, vgl. www.werbeformen.de/ovk/ovk-de/werbeformen/digitale-werbeformen/in-stream/an-undauslieferung-in-stream-video/vpaid.html.

Die Erfindung betrifft in einem weiteren Erfindungsaspekt einen Client-Computer, der eine Standard-Ausführungsumgebung beispielsweise in Form eines Webbrowers umfasst, wobei der Client-Computer dazu ausgebildet ist, Daten in Form von Quellcode von einer externen Quelle zu laden und auszuführen, und wobei der Quellcode im Client-Computer eine eigene Netzwerkkommunikation initiiert und durchführt. Es wird eine in den Client-Computer integrierte Sandbox bereitgestellt, in der der Quellcode ausgeführt wird, wobei zum einen der Quellcode in der Sandbox gegenüber der Standard-Ausführungsumgebung des Client-Computers abgeschirmt ist und zum anderen die durch den Quellcode ausgelösten Ausführungsanweisungen in Ausführungsanweisungen umgewandelt werden, die von der Standard-Ausführungsumgebung zur Realisierung der Netzwerkkommunikation ausgeführt werden können.

Der Client-Computer weist Software auf, die geeignet ist, die in den Verfahrensansprüchen 1 bis 8 angegebenen Verfahrensschritte auszuführen. Beispielsweise ist die Sandbox dazu ausgebildet ist, dass alle Zugriffe des ausführenden Quellcodes auf die Standard-Ausführungsumgebung durch die Sandbox geleitet werden.

In einem weiteren Erfindungsaspekt betrifft die Erfindung ein Computerprogramm mit Programmcode zur Durchführung des Verfahren nach Anspruch 1, wenn das Computerprogramm in einem Computer ausgeführt wird. Der Computer ist insbesondere ein Client Computer. Der Computer kann beispielsweise ein Desktop-, Notebook- oder Tablet-Computer sein und unter einem beliebigen Betriebssystem laufen, wie beispielsweise Windows®, macOS®, Linux®, iOS® oder Android®. Er umfasst in an sich bekannter Weise einen Hauptprozessor (CPU) und Arbeitsspeicher in Form eines Hauptspeichers und einer Random-Access Memory (RAM). Weitere Prozessoren und Grafikkarten können ebenfalls vorhanden sein. Die Standard-Ausführungsumgebung und die Sandbox sind in Form von Programmcode im Arbeitsspeicher gespeichert. Bei Laden in den Hauptprozessor und Ausführung wird ihre Funktionalität bereitgestellt.

Die Erfindung wird nachfolgend unter Bezugnahme auf die Figuren der Zeichnung anhand mehrerer Ausführungsbeispiele näher erläutert. Es zeigen:
- Figur 1: ein Ablaufdiagramm eines Verfahrens zur Ausführung von Quellcode an einem Client-Computer;
- Figur 2: ein Verfahren zum Darstellen eines Bild-Elementes mittels eines Webbrowsers gemäß dem Stand der Technik;
- Figur 3: ein Verfahren zum Darstellen eines Bild-Elementes mittels eines Webbrowsers gemäß einem Ausführungsbeispiel der Erfindung; und
- Figur 4: eine Telekommunikationsanordnung mit einem Client-Computer und einem Werbung-Server, wobei die Kommunikation zwischen diesen über einen Proxy-Server realisiert wird.

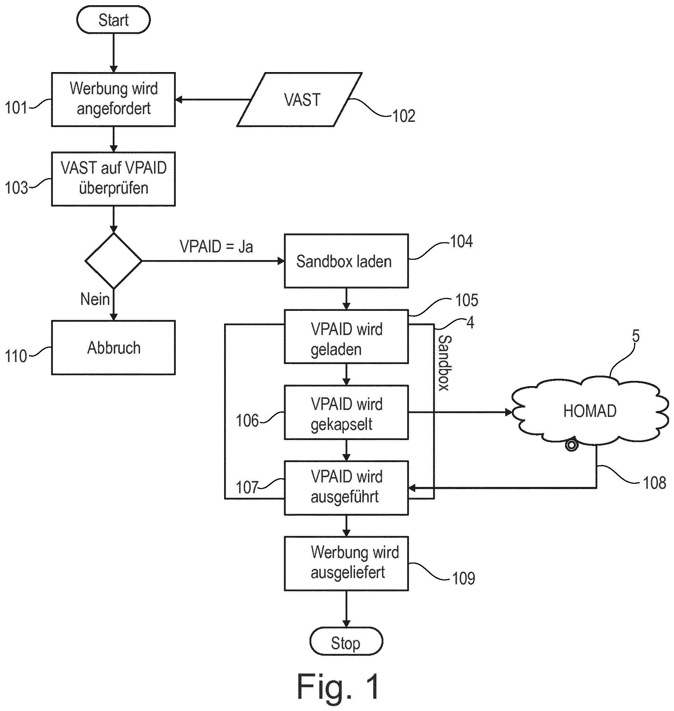

Die Figur 1 zeigt beispielhaft anhand der Ausführung eines im Rahmen einer angeforderten Werbung bereitgestellten Quellcodes den grundlegenden Ablauf des erfindungsgemäßen Verfahrens.

Nach dem Start des Verfahrens wird in Schritt 101 eine Werbung von einem Werbungs-Server angefordert. Die angeforderte Werbung liegt beispielsweise in Form eines Werbefilms vor. Die Wiedergabe der Werbung kann beispielsweise die Voraussetzung dafür sein, um auf einer Webseite gewünschte Informationen in Form von Textdaten und/oder Audiodaten und/oder Videodaten abrufen zu können.

Die Werbung wird dabei durch einen Client-Computer angefordert. Bei dem Client-Computer handelt es sich um ein typisches Kommunikations-Endsystem, beispielsweise einen Personal Computer (PC), einen Laptop, ein Handheld, ein Smartphone oder einen Tablet-Computer. Der Client-Computer umfasst einen Webbrowser oder eine vergleichbare Software, die es ihm erlaubt, Webseiten des "World Wide Web" (WWW) abzurufen, wobei er sich typischerweise der Protokolle HTTP und HTTPS bedient. Das Anfordern der Werbung und die damit einhergehende Kommunikation wird über den Webbrowser initiiert, wobei der Webbrowser zur Darstellung von Audiodaten und/oder Videodaten ggf. auch auf einen Mediaplayer des Client-Computers zurückgreift.

Die Werbung wird in Schritt 102 beispielsweise gemäß dem Standard "Video Ad Serving Template" (VAST) bereitgestellt. Hierbei handelt es sich um einen Standard, der die Kommunikation zwischen einem Werbungs-Server und einem Mediaplayer definiert und hierzu ein XML-basiertes Austauschformat verwendet.

In Schritt 103 wird geprüft, ob die angeforderte Werbung auch dem Standard VPAID (Video Player-Ad Interface Definition) genügt. Hierbei handelt es sich um eine Erweiterung des VAST Standards. Er bezeichnet eine standardisierte Schnittstellenbeschreibung für die Kommunikation zwischen Werbemittel und Videoplayer und ermöglicht interaktive Videowerbung. VPAID erweitert den VAST Werbestandard um interaktive Werbeformen. Damit trägt das Werbemittel nicht mehr nur statische Werbemedien (Bild, Video, Audio), sondern zusätzlich eigenen Quellcode, der zur Laufzeit von der anzeigenden Webseite ausgeführt wird.

Werbung gemäß dem Standard VPAID umfasst somit einen externen Quellcode, der dazu dient, eine eigene Netzwerkkommunikation vorzunehmen. Über den Quellcode und die von diesem initiierte Netzwerkkommunikation werden beispielsweise Informationen darüber an den Werbungs-Server oder einen anderen Empfänger übertragen, wo ein abgespielter Werbefilm auf dem Bildschirm des Client-Computer platziert ist, wie lange der Werbefilm angesehen wird und welches Scroll-Verhalten der Nutzer während des Ansehens des Werbefilmes aufweist. Diese Informationen sind von Bedeutung zur Entscheidung der Frage, ob eine Werbung tatsächlich bei einem Nutzer abgespielt bzw. diesem zur Kenntnis gebracht wurde. Diese Frage wiederum ist von Bedeutung beispielsweise dafür, ob dem Rechteinhaber des Werbefilms eine Gebühr bezahlt wird und/oder der Nutzer des Client-Computers weitere Informationen erhalten darf.

Die Ausführungsumgebung für die VPAID Werbeformen ist der Videoplayer oder das Werbeframework auf der anzeigenden Webseite. Der Interpreter für den Quellcode des VPAIDs die Javascript-Engine des Webbrowsers.

Wenn die Werbung nicht gemäß dem Standard VPAID ausgeführt ist, wird das Verfahren in Schritt 110 abgebrochen.

Ist die Werbung dagegen gemäß dem Standard VPAID ausgeführt ist, so bedeutet dies, dass sie externen Quellcode umfasst. Dieser Quellcode darf einerseits nicht verändert werden. Dies kann aus rechtlichen und/oder technischen Gründen erforderlich sein. Andererseits wird eine Netzwerkkommunikation, die der externe Quellcode initiiert, durch den standardgemäßen Webbrowser blockiert, weil der Webbrowser selbst oder eine Firewall oder ein Werbungsblocker diese Kommunikation verhindert oder Teile der Kommunikation verändert, oder weil allgemein eine technische Route zwischen dem Client-Computer und dem Werbeserver nicht hergestellt werden kann.

Um dieses Problem zu beseitigen, wird die Ausführungsumgebung mittels einer Sandbox 4 erweitert, wobei die Ausführungsanweisungen bzw. Befehle des externen Quellcodes allein von der Sandbox 4 entgegengenommen und innerhalb der Sandbox 4 ausgeführt werden. Gleichzeitig werden die Ausführungsanweisungen des Quellcodes manipuliert und erweitert und dadurch auf entsprechende Ausführungsanweisungen der Standard-Ausführungsumgebung abgebildet, sodass die Netzwerkkommunikation korrekt stattfinden kann. Bei der dann durchgeführten Kommunikation wird auf die Prinzipien der DE 10 2012 102 399 A1 zurückgegriffen. Gemäß der DE 10 2012 102 399 A1 wird, wenn ein Netzwerkteilnehmer A einen Netzwerkteilnehmer B nicht erreichen kann, die Kommunikation über einen Proxy-Server C geleitet, der die Netzwerk Antworten so manipuliert, dass auch die nachfolgende Netzwerkkommunikation von A über den Proxy-Server C geleitet wird.

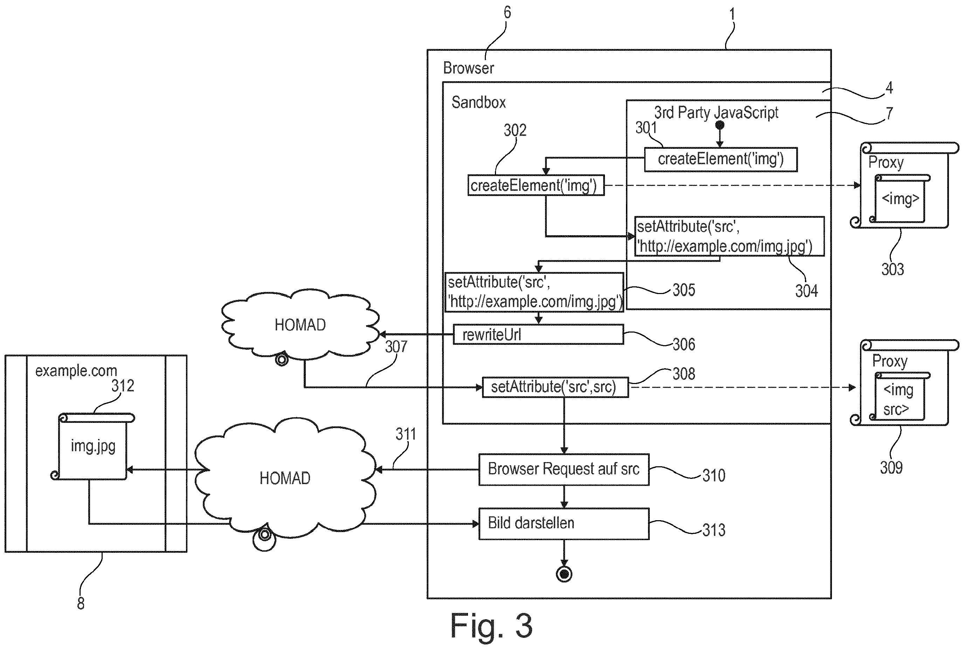

Im Einzelnen wird, sofern die angeforderte Werbung Werbeformen gemäß dem Standard VPAID aufweist, zunächst in Schritt 104 die Sandbox 4 geladen. Anschließend wird der in der Werbung enthaltene Quellcode in Schritt 105 innerhalb der Sandbox 4 geladen. Der Quellcode wird anschließend innerhalb der Sandbox 4 in Schritt 106 gekapselt, d. h. er wird innerhalb der Sandbox ausgeführt. Für das Ausführen des Quellcodes innerhalb der Sandbox ist eine Netzwerkkommunikation über ein Netzwerk 5 gemäß Schritt 108 erforderlich. Im Rahmen der Netzwerkkommunikation werden beispielsweise erforderliche Inhalte von einem Server heruntergeladen. Die Netzwerkkommunikation erfolgt dabei unter Zwischenschaltung eines Proxy-Servers, entsprechend dem in der DE 10 2012 102 399 A1 beschriebenen Verfahren. Eine Netzwerkkommunikation entsprechend dem in der DE 10 2012 102 399 A1 beschriebenen Verfahren wird in der Figur 1 und auch in der Figur 3 als "HOMAD" bezeichnet.

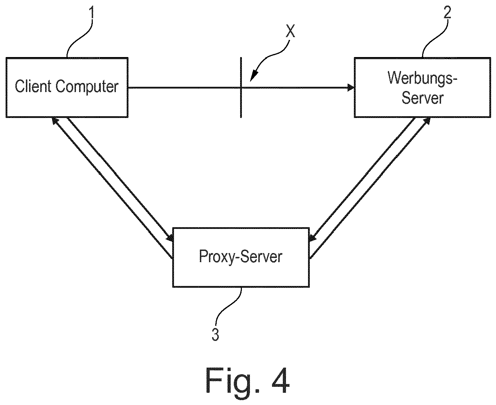

Die Figur 4 erläutert eine solche Netzwerkkommunikation, die unter Zwischenschaltung eines Proxy-Servers erfolgt. Die Figur 4 zeigt eine Telekommunikationsanordnung, die einen Client-Computer 1, einen Werbungs-Server 2 und einen Proxy-Server 3 umfasst. Bei dem Client-Computer 1 handelt es sich wie bereits erwähnt um ein Kommunikations-Endsystem, das einen Web-Browser umfasst. Der Client-Computer 1 kann grundsätzlich über seinen Webbrowser direkt auf den Werbungs-Server 2 zugreifen. Beide sind über ein Kommunikationsnetz, nämlich ein Computernetzwerk (z.B. das Internet) miteinander verbunden. Wenn eine gewünschte Information nicht direkt vom Werbungs-Server 2 zum Client-Computer 1 übertragen werden kann (wie schematisch durch den Pfeil X und die senkrechte Trennlinie im Kommunikationspfeil zwischen Client-Computer 1 und Werbungs-Server 2 angedeutet ist), beispielsweise aufgrund von Werbeblockern oder durch eine Inkompatibilität der Cookies des Werbungs-Servers 2 mit Filterfunktionen des Webbrowsers des Client-Computers 1, erfolgt die Kommunikation zwischen dem Client-Computer 1 und dem Werbungs-Server 2 unter Zwischenschaltung des Proxy-Servers 3. Dabei erfolgt im Proxy-3 Server eine Manipulation der Absenderinformation der Datenpakete und/oder der Absenderinformation einer in den Datenpaketen enthaltenen, für den Client-Computer 1 bestimmten Cookie-Datei. Diese Manipulation dient dazu zu vermeiden, dass das Abspielen der Daten im Client-Computer 1 durch Erkennen bestimmter Absenderinformationen blockiert werden kann. Die so manipulierten Daten werden vom Proxy-Server 3 zum Client-Computer 1 übertragen und dort abgespielt. Dabei wird die gesamte Kommunikation über den Proxy-Server gelenkt. Der Proxy-Server übergibt alle Daten, die der Client sonst selbst an den Werbungs-Server übergeben würde, selbst an den Werbungs-Server. Wegen der Details des Verfahrens wird auf die DE 10 2012 102 399 A1 verwiesen.

Wieder Bezug nehmend auf Figur 1 wird nach Vorliegen der erforderlichen Informationen der Quellcode in Schritt 107 dann innerhalb der Sandbox 4 ausgeführt.

In Schritt 109 wird die Werbung an den Webbrowser ausgeliefert und am Client-Computer dargestellt. Anschließend endet das Verfahren.

Es wird darauf hingewiesen, dass das Verfahren nur beispielhaft anhand des Standards VPAID erläutert wurde. Es gilt in gleicher Weise für jede Werbung, die nicht lediglich die eigentliche Werbung, sondern zusätzlich Programmcode bzw. Quellcode umfasst. Insbesondere gibt es eine Weiterentwicklung, die den VPAID Standard durch einen neuen Standard mit dem Namen "Viewability and Ad Verification" in VAST4.0 standardisiert, für den die erfindungsgemäßen Verfahren in gleicher Weise Anwendung finden, siehe
https://www.iab.com/wp-content/uploads/2016/04/VAST4.0_Updated_April_2016.pdf.

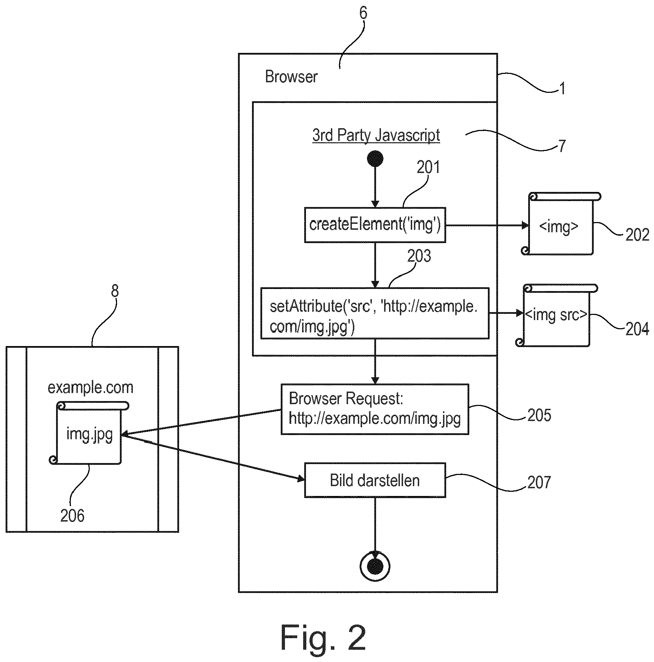

Im Folgenden wird die Funktionsweise der Sandbox 4 näher erläutert. Bevor dies anhand der Figur 3 erfolgt, wird anhand der Figur 2 die standardgemäße Verarbeitung einer Werbung durch einen Webbrowser erläutert. Dies wird beispielhaft anhand eines Bildelementes (img), zum Beispiel eines "Tracking Pixels" dargestellt. Ein solcher Pixel genügt für den Nachweis der Zustellung einer Werbung.

Gemäß der Figur 2 weist ein Client-Computer 1 einen Webbrowser 6, d. h. ein Computerprogramm zur Darstellung von Webseiten im World Wide Web auf. Der Client-Computer 1 umfasst hierbei in an sich bekannter Weise einen oder mehrere Prozessoren, Speicher und im Speicher gespeicherten Programmcode von Computerprogrammen, der bei Ausführung durch einen Prozessor die Funktionalität des jeweiligen Computerprogramms bereitstellt.

Der Client-Computer 1 umfasst externen Quellcode 7, der beispielsweise entsprechend der Schritte 101, 102 der Figur 1 in den Client-Computer 1 geladen wurde. Der externe Quellcode 7 ist in der Figur 2 als "3rd Party Javascript" bezeichnet. Er kann dementsprechend beispielsweise in der Skriptsprache JavaScript verfasst sein. Dies ist jedoch nur beispielhaft zu verstehen. Die Ausführung des externen Quellcodes 7 erfolgt durch den Webbrowser 6.

Gemäß dem externen Quellcode 7 wird mit dem Befehl 201 "createElement('img')" ein leerer Bildcontainer 202 "<img>" erzeugt. Im darauffolgenden Befehl 203 "setAttribute ('src', 'http://example.com/img.jpg')" wird eine Quelle (source - src) definiert, die den Bildcontainer 202 mit Inhalt füllt, die somit einen Bildcontainer 204 definiert, dem ein bestimmter Inhalt zugeordnet ist, der in der Quelle enthalten ist. Die Quelle bzw. Source ist dabei auf einer bestimmten Website "example.com" zu finden, wie in Befehl 203 angegeben ist.

Die Quelle ist jedoch außerhalb des Client-Computers 1. Gemäß dem Befehl 205 des Webbrowsers 6 wird eine Netzwerkkommunikation zu der Webseite 8, im dargestellten Beispiel der Webseite "example.com" aufgebaut. Diese enthält den gewünschten Bildinhalt "img.jpg" 206. Dieser wird über die aufgebaute Netzwerkkommunikation zum Browser 6 übertragen und von diesem in Schritt 207 als Bild dargestellt. Die Ausführung des Quellcodes 7 und der Aufbau einer Netzwerkkommunikation erfolgt dabei über den Browser 6.

Das in Bezug auf die Figur 2 beschriebenen Verfahren scheitert jedoch, wenn der geladene Quellcode eine eigene Netzwerkkommunikation initiieren will. Da diese Netzwerkkommunikation mit herkömmlichen Verfahren aus dem Quellcode der Hauptanwendung heraus nicht modifizierbar ist, wird sie bei auftretenden Problemen der Netzwerkverbindung scheitern. Defekte Netzwerkrouten, Firewalls oder Browser Plugins wie Adblocker können diese Kommunikation verhindern. Eine eigene Netzwerkkommunikation ist bei interaktiven Werbeformen jedoch erforderlich.

Die Figur 3 erläutert die Funktionsweise der Sandbox 4 der Figur 1. Wie in der Figur 2 weist ein Client-Computer 1 einen Webbrowser 6, d. h. ein Computerprogramm zur Darstellung von Webseiten im World Wide Web auf. Anders als in der Figur 2 ist eine isolierte Ausführungsumgebung in Form der Sandbox 4 realisiert. Der externe Quellcode 7 ("3rd Party Javascript") wird durch die Sandbox 4 gegenüber dem Webbrowser 6 des Client-Computers 1 abgeschirmt.

Da der auszuführende Quellcode unbekannt und nicht änderbar ist, wird die ursprüngliche Ausführungsumgebung (der Webbrowser 6) innerhalb der Sandbox 4 isoliert und werden alle Zugriffe des auszuführenden Codes auf die ursprüngliche Ausführungsumgebung durch die Sandbox 4 geleitet.

Dabei gibt es gemäß einer Ausführungsvariante vier Typen von Funktionalitäten in der ursprünglichen Ausführungsumgebung, die von der Sandbox 4 übernommen werden:
- Funktionen, die DOM Elemente (DOM = "Document Object Model" bzw. Dokumenten-Objekt-Modell) erzeugen, oder zurückliefern, z.B. createElement, getElementByld;
- Funktionen, die den DOM manipulieren, z.B. appendChild, removeChild;
- Funktionen, die Code ausführen; z.B. setTimeout, Script-Tag; und
- Protoypeobjekte, die Netzwerkrequest ausführen, z.B. XMLHttpRequest

Für jede dieser Funktionen muss die ursprüngliche Referenz durch die Sandbox 4 gesichert werden und die ursprüngliche Funktion muss mit der geänderten Version der Sandbox überschrieben werden.

Um zu gewährleisten, dass alle diese Funktionen und Objekte die Netzwerkkommunikation durch die Sandbox 4 laufen lassen, werden Funktionen, die DOM Elemente erzeugen oder zurückliefern, dahingehend geändert, dass diese ein Proxy Objekt zurückgeben, welches das ursprüngliche DOM Element enthält. Alle Zugriffe auf dieses DOM Element laufen dann durch den ProxyHandler des Proxy Objekt und kapseln den direkten Zugriff.

Dies wird wie in der Figur 2 anhand des Beispiels des Befehls "createElement('img')" beschrieben. Der Befehl 301 "createElement('img')" zur Erzeugung eines Bildcontainers wird durch den externen Quellcode erzeugt. Dieser Befehl wird aber nicht an den Webbrowser 6 übergeben, sondern an die Sandbox 4. Diese erzeugt daraufhin einen entsprechenden Befehl 302 "createElement('img')". Dieser erzeugt in der Sandbox 4 ein Proxy Objekt 303 "Proxy <img>" eines Bildcontainers. Im Einzelnen:
Beispiel createElement:

```
 var createElementProxy =function(tagName)
 {
  var newEI = savedObjects['createElement'](tagName);
  var proxy = new Proxy(newEl, proxyHandler);
  return proxy;
 }
```

An dem Beispiel zu createElement wird die grundsätzliche Vorgehensweise für Funktionen, die DOM Elemente erzeugen oder zurückliefern ersichtlich. Diese Funktion bekommt in der ursprünglichen Ausführungsumgebung einen Parameter, der besagt, welches Element erzeugt werden soll und gibt nach Ausführung dieses Element zurück, welches im Nachgang in den DOM integriert werden kann.

Innerhalb der Sandbox wird die ursprüngliche Funktion aufgerufen und das Element erzeugt (savedObjects['createElement'](tagName)), siehe Befehl 302. Danach wird ein Proxy Objekt 303 erzeugt und dieses Proxy Objekt mit dem neuen Element und einem Proxy Handler angereichert (new Proxy(newEl, proxyHandler)) und zurückgegeben.

Auch der nachfolgende Befehl 304 "setAttribute('src', 'http://example.com/img.jpg')" des Quellcodes, der eine Quelle (source - src) definiert, die den Bildcontainer mit Inhalt füllt, wird an die Sandbox übergeben und in dieser erneut in Befehl 305 ausgeführt.

Der Proxy Handler sorgt dafür, dass alle Zugriffe über wohldefinierte Methoden des Handlers geleitet werden.

Beispiel Proxy Handler:

```
 var proxyHandler = {
  set: function(oTarget, sKey, vValue)
  {
    if (sKey=='src')
    {
      vValue = rewriteUrl(vValue);
      if (isScript(oTarget))
      {
         var jsCode = loadSyncResource(vValue);
         jsCode = "executelnSandbox("+jsCode+")";
         vValue = getBase64DataUri(jsCode);
    } }
    return oTarget[sKey] = vValue;
  },
  //...
 }
```

Die set-Methode des Proxy Handlers wird durch den ausführenden Code aufgerufen, sobald auf ein Attribut schreibend zugegriffen wird. Dabei bekommt diese Methode das originale Objekt (oTarget), den Namen des zu setzenden Attributes (sKey), sowie den zukünftigen Wert (sValue) als Parameter übergeben.

Innerhalb dieser Methode wird dann geprüft, ob das Setzen des Attributes darauf hindeutet, dass eine Netzwerkkommunikation ausgelöst werden soll (sKey=='src'). Ist dies der Fall, wird die ursprüngliche URL genommen und umgewandelt (vValue = rewriteUrl(vValue)). Dies ist in Schritt 306 angegeben. Die neue URL wird dann auf durch den Proxy gekapselten Objekt gesetzt (oTarget[sKey] = vValue). Das Überschreiten der URL erfolgt in Schritt 307 unter Verwendung eines Proxy-Servers entsprechend dem in der DE 10 2012 102 399 A1 beschriebenen Verfahren. Die URL wird überschrieben, da sie von einem Dritten als Source angegeben wurde und daher blockiert würde. Die Blockierung wird über den Schritt 307 und das Überschreiben verhindert.

Es wird darauf hingewiesen, dass ein Proxy Objekt, welches das ursprüngliche DOM Element enthält, nichts mit einem Proxy-Server 3 gemäß der Figur 4 zu tun hat. Vielmehr wird das Proxy Objekt im Rahmen der Funktionalität der Sandbox 4 erzeugt. Es handelt sich beispielsweise um ein Proxy Objekt der Skriptsprache JavaScript. Der Proxy-Server 3 gemäß der Figur 4 ist dagegen ein Netzwerk-Proxy.

Wird mit dem Setzen des src-Attributes gemäß Schritt 308 (Befehl "setAttribute('src','src')") in der Sandbox 4 ein Vorgang zum Nachladen von weiterem Code angestoßen, zum Beispiel beim Setzen des src-Attributes auf einem Script-Element, so muss sichergestellt werden, dass der nachgeladene Code ebenfalls innerhalb der Sandbox 4 ausgeführt wird. Weiter wird das Proxy Objekt 309 erzeugt, welches das ursprüngliche DOM Element und die die Quelle (source - src) enthält.

Weiter wird geprüft, ob das ursprüngliche Proxy Objekt ein Script ist (isScript(oTarget)), und wenn dies der Fall ist, so wird der Code direkt geladen (var jsCode = loadSyncResource(vValue)) und zwar - wegen der vorherigen Umwandlung der URL gemäß der Schritten 306, 307 - entsprechend dem in der DE 10 2012 102 399 A1 beschriebenen Verfahren (HOMAD). Dieser Vorgang wird synchron ausgeführt, um sicherzustellen, dass keine Nebenläufigkeitsprobleme auftreten. Der nun als Text vorliegende auszuführende Code wird durch den Aufruf "executelnSandbox" umschlossen und danach als Base64 encodierte Data URI dem src-Attribute des gekapselten Objektes übergeben, was wiederum die Ausführung in der Sandbox startet. Das weitere Verfahren zeigen die Befehle bzw. Schritte 310 bis 312. Gemäß dem Befehl 310 des Webbrowsers 6 wird eine Netzwerkkommunikation zu der Webseite 8, im dargestellten Beispiel der Webseite "example.com" aufgebaut. Diese enthält den gewünschten Bildinhalt "img.jpg" 312. Dieser wird über die aufgebaute Netzwerkkommunikation zum Browser 6 übertragen und von diesem in Schritt 313 als Bild dargestellt. Die Kommunikation 311 erfolgt entsprechend dem in der DE 10 2012 102 399 A1 beschriebenen Verfahren (HOMAD) unter Zwischenschaltung eines Proxy-Servers.

Hinsichtlich DOM-Manipulationen wird Folgendes angemerkt: DOM-manipulierende Funktionen wie zum Beispiel appendChild oder removeNode können nicht direkt auf oder mit Proxy Objekten ausgeführt werden. Der Zugriff erfolgt in diesem Fall über die get-Methode des ProxyHandlers, der wiederum eine gepackte Version der Funktion zurückliefert, dessen Ausführungskontext das aufrufende DOM-Element ist (return target[property].bind(target)):
Beispiel:

```
 var proxyHandler = {
  get: function(target, property, receiver)
  {
    if (target[property] && typeof target[property]=='function')
    {
      if (property=='appendChild')
      {
         return appendChildProxy.bind(target);
      } else
      {
         return target[property].bind(target);
      }
    }
  },
  //...
 }
```

Innerhalb der DOM-Manipulierenden Funktion muss geprüft werden, ob das übergebende Element (child) ein gepatchtes Objekt ist, oder nicht (child.original && typeof child.original =='object'). Im ersten Fall wird das original Element entpackt und mit diesem die DOM Manipulation vorgenommen this.appendChild(child.original).

Beispiel:

```
 appendChildProxy: function (child) {
  if (child.original && typeof child.original == 'object') {
    th is.appendChild(child.original);
  } else {
    this.appendChild(child);
  }
 }
```

Durch diese Vorgehensweise wird es ermöglicht, dass das Erzeugen und Manipulieren von DOM-Elementen durch den auszuführenden 3rd-Party Javascript Code von der Sandbox abgefangen wird und alle Zugriffe auf diese DOM-Elemente durch den Proxy über den ProxyHandler geleitet werden.

Innerhalb des ProxyHandlers wird der Zugriff auf Methoden und Attribute der gekapselten Objekte überwacht und alle URLs umgeschrieben (in diesem Fall zu HOMAD-URLs umgewandelt). Somit ist sichergestellt, dass der Netzwerkverkehr über die HOMAD Server umgeleitet werden kann.

Damit der auszuführende Code nicht aus der Sandbox ausbrechen kann, werden auch alle Funktionalitäten, die Code ausführen können so abgeändert, dass der nachgeladene Code mit der Sandbox umschlossen wird (jsCode = "executelnSandbox("+jsCode+")";) und als Base64 encodierte DATA-URI ausgeführt wird (vValue = getBase64DataUri(jsCode);).

Die Erfindung beschränkt sich in ihrer Ausgestaltung nicht auf die vorstehend dargestellten Ausführungsbeispiele, die lediglich beispielhaft zu verstehen sind.

## Patentansprüche

1. Verfahren zur Ausführung von Quellcode an einem Client-Computer (1), wobei der Quellcode von einer externen Quelle geladen und im Client-Computer (1) ausgeführt wird und der Quellcode dabei im Client-Computer (1) eine eigene Netzwerkkommunikation initiiert,
**dadurch gekennzeichnet, dass**
der Quellcode in einer in den Client-Computer (1) integrierten Sandbox (4) ausgeführt wird, in der zum einen der Quellcode gegenüber der Standard-Ausführungsumgebung (6) des Client-Computers (1) abgeschirmt ist und in der zum anderen die durch den Quellcode ausgelösten Ausführungsanweisungen in Ausführungsanweisungen umgewandelt werden, die von der Standard-Ausführungsumgebung (6) zur Realisierung der Netzwerkkommunikation ausgeführt werden.

2. Verfahren nach Anspruch 1 oder 2, **dadurch gekennzeichnet, dass** alle Ausführungsanweisungen zum Aufbau, zur Durchführung und zum Abbau der Netzwerkkommunikation an die Sandbox (4) übergeben werden, die diese Ausführungsanweisungen in entsprechende, durch die Standard-Ausführungsumgebung des Client-Computers (1) durchgeführte Maßnahmen umwandelt.

3. Verfahren nach einem der vorangehenden Ansprüche, **dadurch gekennzeichnet, dass** alle Zugriffe des ausführenden Quellcodes auf die Standard-Ausführungsumgebung (6) durch die Sandbox (4) geleitet werden.

4. Verfahren nach Anspruch 3, **dadurch gekennzeichnet, dass** mindestens einer der folgenden Typen von Funktionen der Standard-Ausführungsumgebung (6) von der Sandbox (4) übernommen wird:
- Funktionen zum Erzeugen oder Zurückliefern von Elementen des Typs "Document Object Model" ("DOM-Elemente"),
- Funktionen zum Manipulieren von DOM-Elementen;
- Funktionen zum Ausführen des Quellcodes,
- Funktionen zum Ausführen eines Netzwerkrequests (Prototypobjekte).

5. Verfahren nach Anspruch 4, **dadurch gekennzeichnet, dass** Funktionen, die DOM-Elemente erzeugen oder zurückliefern, dahingehend geändert werden, dass diese ein Proxy-Objekt zurückgeben, welches das ursprüngliche DOM-Element enthält, wobei alle Zugriffe auf das DOM-Element durch einen ProxyHandler des Proxy-Objekts laufen und diesen vor einem direkten Zugriff kapseln.

6. Verfahren nach einem der vorangehenden Ansprüche, **dadurch gekennzeichnet, dass** der Quellcode innerhalb der Sandbox (4) ausgeführt wird und dabei Programmcode, der im Rahmen der durch den Quellcode initiierten Netzwerkkommunikation geladen wird, ebenfalls in der Sandbox (4) ausgeführt wird.

7. Verfahren nach einem der vorangehenden Ansprüche, **dadurch gekennzeichnet, dass** die durch den Quellcode initiierte Netzwerkkommunikation über einen Proxy-Server (3) erfolgt, wobei die Kommunikation an den Proxy-Server (3) geleitet und die Daten im Proxy-Server (3) derart manipuliert werden, dass an den Proxy-Server (3) geleiteten Daten nach der Manipulation an den Client-Computer (1) übertragen und dort dargestellt werden können.

8. Verfahren nach einem der vorangehenden Ansprüche, **dadurch gekennzeichnet, dass** der Quellcode eine Netzwerkkommunikation initiiert, die dazu dient, Video-Grafik-, Banner- oder Textdaten von einem Werbungs-Server (2) an den Client-Computer (1) zu übertragen und diese auf dem Client-Computer (1) darzustellen.

9. Client-Computer, der eine Standard-Ausführungsumgebung umfasst, wobei der Client-Computer (1) dazu ausgebildet ist, Daten in Form von Quellcode von einer externen Quelle zu laden und auszuführen, und wobei der Quellcode im Client-Computer (1) eine eigene Netzwerkkommunikation initiiert,
**gekennzeichnet durch**
eine in den Client-Computer (1) integrierte Sandbox (4), in der der Quellcode ausgeführt wird, wobei zum einen der Quellcode in der Sandbox (4) gegenüber der Standard-Ausführungsumgebung des Client-Computers (1) abgeschirmt ist und zum anderen die durch den Quellcode ausgelösten Ausführungsanweisungen in der Sandbox (4) in Ausführungsanweisungen umgewandelt werden, die von der Standard-Ausführungsumgebung (6) zur Realisierung der Netzwerkkommunikation ausgeführt werden.

10. Client-Computer nach Anspruch 9, **dadurch gekennzeichnet, dass** die Sandbox (4) dazu ausgebildet ist, dass alle Zugriffe des ausführenden Quellcodes auf die Standard-Ausführungsumgebung durch die Sandbox (4) zu leiten.

11. Client-Computer nach Anspruch 9 oder 10, **dadurch gekennzeichnet, dass** mindestens einer der folgenden Typen von Funktionen der Standard-Ausführungsumgebung von der Sandbox (4) übernommen ist:
- Funktionen zum Erzeugen oder Zurückliefern von Elementen des Typs "Dokumenten-Objekt-Modell", ("DOM-Elemente"),
- Funktionen zum Manipulieren von DOM-Elementen;
- Funktionen zum Ausführen des Quellcodes,
- Funktionen zum Ausführen eines Netzwerkrequests (Prototypobjekte).

12. Client-Computer nach Anspruch 11, **dadurch gekennzeichnet, dass** die Sandbox (4) dazu ausgebildet ist, dass Funktionen, die DOM-Elemente erzeugen oder zurückliefern, dahingehend geändert werden, dass diese eine Proxy-Objekt zurückgeben, welches das ursprüngliche DOM-Element enthält.

13. Client-Computer nach einem der Ansprüche 9 bis 12, **dadurch gekennzeichnet, dass** der Quellcode innerhalb der Sandbox (4) ausgeführt wird und dabei Programmcode, der im Rahmen der durch den Quellcode initiierten Netzwerkkommunikation geladen wird, ebenfalls in der Sandbox (4) ausgeführt wird.

14. Client-Computer nach einem der Ansprüche 9 bis 13, **dadurch gekennzeichnet, dass** der Client-Computer (1) eine Standard-Ausführungsumgebung (6) in Form eines Webbrowers umfasst und der Quellcode dazu vorgesehen ist, eine Netzwerkkommunikation zu initiieren, die dazu dient, Videodaten von einem Werbungs-Server (2) an den Client-Computer (1) zu übertragen und diese auf dem Client-Computer (1) darzustellen.

15. Computerprogramm mit Programmcode zur Durchführung des Verfahren nach Anspruch 1, wenn das Computerprogramm in einem Computer ausgeführt wird.
